# EUROPEAN PATENT APPLICATION

(11) **EP 4 635 328 A1**
(43) Date of publication of application: **22.10.2025**
(21) Application number: 22968559.9
(22) Date of filing: 16.12.2022
(51) Int. Cl.: A24F 40/50, A24F 40/51

(54) **POWER SOURCE UNIT FOR AEROSOL GENERATION DEVICE, AND AEROSOL GENERATION DEVICE**

(71) Applicant: Japan Tobacco Inc., Tokyo 105-6927 (JP)
(72) Inventor: MINATO Junji, Tokyo 130-8603 (JP); KAWANAGO Hiroshi, Tokyo 130-8603 (JP); ICHINOSE Atsushi, Tokyo 130-8603 (JP)
(74) Representative: Hoffmann Eitle
(86) International application number: PCT/JP2022/046468
(87) International publication number: WO 2024/127650

(57) **Abstract**

An inhalation device (100) comprises: a power source unit (111C) that supplies power to a heating unit (121C); stick detection sensors (12), an inhalation sensor (13), and a case temperature sensor (14); a sensor FPC (73) that is a flexible circuit board on which said sensors are mounted; a main board (50) that is a rigid board fixed to the sensor FPC (73) via a sensor FPC connection part (55); and a case (20). The stick detection sensors (12), the inhalation sensor (13), and the case temperature sensor (14) are electrically connected to the main board (50) via the sensor FPC connection part (55).

## Description

### TECHNICAL FIELD

The present disclosure relates to a power source unit for an aerosol generation device, and an aerosol generation device.

### BACKGROUND ART

An aerosol generation device includes, accommodated in a case, a power source, a heating unit, a plurality of sensors, a circuit board on which sensors or a control device is mounted, etc. (e.g., PTL 1). An aerosol generation device, such as a heating smoking device, is preferably sized to fit in the hand of the user.

### CITATION LIST

### PATENT LITERATURE

[PTL 1] Published Japanese translation of PCT international publication for patent application 2022-534652

### SUMMARY OF INVENTION

### TECHNICAL PROBLEM

However, it is difficult to reduce the size of the power source and the heating unit due to size constraints depending on requirements such as the use time and the heating temperature. Meanwhile, the circuit board is used to mount sensors or a control device and has room for improvement.

The present disclosure provides a power source unit of an aerosol generation device and an aerosol generation device that can be made compact.

### SOLUTION TO PROBLEM

A power source unit for an aerosol generation device according to the present disclosure comprises:
a power source that supplies power to a heating unit for heating an aerosol source;
at least two or more sensors;
a flexible circuit board on which the at least two or more sensors are mounted;
a rigid board fixed to the flexible circuit board via a connection part; and
a case that houses the power source, the at least two or more sensors, the flexible circuit board, and the rigid board, wherein
the at least two or more sensors are electrically connected to the rigid board via the connection part.

An aerosol generation device of the present disclosure comprises:
a power source;
a heating unit that consumes power supplied from the power source to heat an aerosol source;
at least two or more sensors;
a flexible circuit board on which the at least two or more sensors are mounted;
a rigid board fixed to the flexible circuit board via a connection part; and
a case that houses the power source, the at least two or more sensors, the flexible circuit board, and the rigid board, wherein
the at least two or more sensors are electrically connected to the rigid board via the connection part.

### ADVANTAGEOUS EFFECTS OF INVENTION

According to the present disclosure, the power source unit and/or the aerosol generation device or the aerosol generation device can be made compact.

### BRIEF DESCRIPTION OF DRAWINGS

Fig. 1 is a schematic diagram schematically illustrating a first configuration example (inhalation device 100A) of an inhalation device.
Fig. 2 is a schematic diagram schematically illustrating a second configuration example (inhalation device 100B) of the inhalation device.
Fig. 3 is an overall perspective view of the inhalation device 100 according to one embodiment of the present disclosure.
Fig. 4 is a perspective view seen from the front-right side of an internal unit 10.
Fig. 5 is a perspective view of the internal unit 10 seen from the front-left side.
Fig. 6 is an exploded perspective view of the internal unit 10.
Fig. 7 is a cross-sectional perspective view of a heater assembly 30.
Fig. 8 is a block diagram that briefly illustrates the electrical connection of the main elements of the internal unit 10.
Fig. 9 is a developed view of the front surface of a sensor FPC 73.
Fig. 10 is a developed view of the rear surface of the sensor FPC 73.
Fig. 11 is a cross-sectional view of the sensor FPC 73.

### DESCRIPTION OF EMBODIMENTS

The inhalation device, control method, and program according to an embodiment of the present disclosure will now be described with reference to the drawings. Two configuration examples (a first configuration example and a second configuration example) to which the configuration of the inhalation device according to the present disclosure can be applied are described. It should be noted that, hereinafter, the same or similar elements may be given the same or similar reference signs, and the description thereof may be omitted or simplified as appropriate.

### 1. Configuration Example of Inhalation Device

An inhalation device is a device for generating a substance to be inhaled by a user. Hereinafter, the substance generated by the inhalation device is described as being an aerosol. Alternatively, the substance generated by the inhalation device may be a gas.

### (1) First Configuration Example

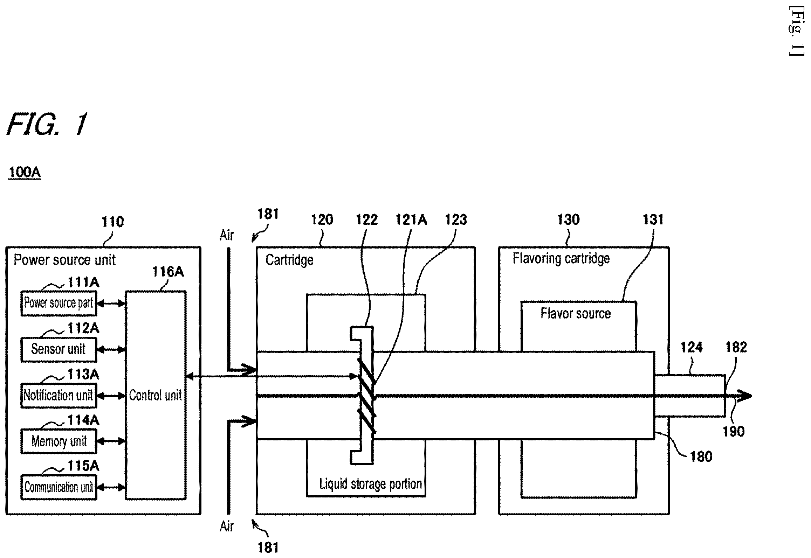

Fig. 1 is a schematic diagram schematically illustrating a first configuration example of the inhalation device. As shown in fig. 1, the inhalation device 100A according to this configuration example includes a power source unit 110, a cartridge 120, and a flavoring cartridge 130. The power source unit 110 comprises a power source part 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source part 111A stores electrical power. The power source part 111A then supplies the electrical power to each component of the inhalation device 100A in accordance with control performed by the control unit 116A. The power source part 111A may be configured, for example, by a rechargeable battery such as a lithium ion secondary battery.

The sensor unit 112A acquires various types of information relating to the inhalation device 100A. As an example, the sensor unit 112A is configured from a pressure sensor such as a capacitor microphone, a flow rate sensor or a temperature sensor, and so on, and acquires values associated with inhalation by a user. As another example, the sensor unit 112A is configured from an input device, such as a button or switch, for accepting input of information from the user.

The notification unit 113A notifies the user of information. The information that the notification unit 113A notifies to the user includes, for example, a SOC (State of Charge) indicating a state of charge of the power source part 111A, pre-heating time at the time of inhalation, inhalation period, and so on. The notification unit 113A can be configured from, for example, a light-emitting device that emits light, a display device that displays images, a sound output device that outputs sound, a vibration device that vibrates, and so on.

The memory unit 114A stores various types of information for the operation of the inhalation device 100A. The memory unit 114A can be configured from a non-volatile storage medium such as a flash memory, for example.

The communication unit 115A is a communication interface capable of performing communication in accordance with any wired or wireless communication standard. Examples of communication standards that may be used include standards that employ Wi-Fi (registered trademark), Bluetooth (registered trademark), Bluetooth Low Energy (BLE) (registered trademark), Near-Field Communication (NFC), or Low Power Wide Area (LPWA), and so on.

The control unit 116A functions as an arithmetic processing device and a control device, and controls overall operation within the inhalation device 100A in accordance with various programs. The control unit 116A is realized by a central processing unit (CPU) or an electronic circuit such as a microprocessor, for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the inhalation device 100A is a medical inhaler such as a nebulizer, the aerosol source may include a drug.

The liquid guiding portion 122 guides the aerosol source, which is the liquid stored in the liquid storage portion 123, from the liquid storage portion 123, and holds the aerosol source. The liquid guiding portion 122 is, for example, a wick formed by twisting a fibrous material such as glass fibers or a porous material such as a porous ceramic. In such case, the aerosol source stored in the liquid storage portion 123 is guided by the capillary effect of the wick.

The heating unit 121A heats the aerosol source to atomize the aerosol source, thereby generating the aerosol. In the example shown in fig. 1, the heating unit 121A is configured as a coil wrapped around the liquid guiding portion 122. When the heating unit 121A generates heat, the aerosol source held in the liquid guiding portion 122 is then heated and atomized, generating the aerosol. The heating unit 121A generates heat when supplied with electricity from the power source part 111A. For example, electricity may be supplied when the sensor unit 112A detects that the user has started inhaling and/or that predetermined information has been input. The supply of electricity to the heating unit 121A may then be stopped when the sensor unit 112A detects that the user has finished inhaling and/or that predetermined information has been input. Note that the inhalation action of the user on the inhalation device 100A is detectable, for example, based on pressure (internal pressure) exceeding a predetermined threshold in the inhalation device 100A detected by an inhalation sensor.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180. Midway through the air flow path 180, the liquid guiding portion 122 is disposed upstream (closer to the air inflow hole 181), and the flavor source 131 is disposed downstream (closer to the air outflow hole 182). Air flowing in through the air inflow hole 181 upon inhalation by the user is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is applied to the aerosol.

The mouthpiece 124 is a member that is held in the user's mouth during inhalation. The air outflow hole 182 is disposed in the mouthpiece 124. The user holds the mouthpiece 124 in their mouth to make it possible to draw the mixed fluid of aerosol and air into the oral cavity.

A configuration example of the inhalation device 100A has been described above. The inhalation device 100A is, of course, not limited to the configuration described above, and may adopt various configurations, such as those illustrated below as examples.

As an example, the inhalation device 100A need not include the flavoring cartridge 130. In such a case, the cartridge 120 is provided with the mouthpiece 124.

As another example, the inhalation device 100A may include a plurality of types of aerosol sources. Other types of aerosol may be generated by a plurality of types of aerosol generated from the plurality of types of aerosol sources being mixed in the air flow path 180 to cause a chemical reaction.

Furthermore, the means for atomizing the aerosol source is not limited to heating provided by the heating unit 121A. For example, the means for atomizing the aerosol source may be vibration atomization or induction heating.

### (2) Second Configuration Example

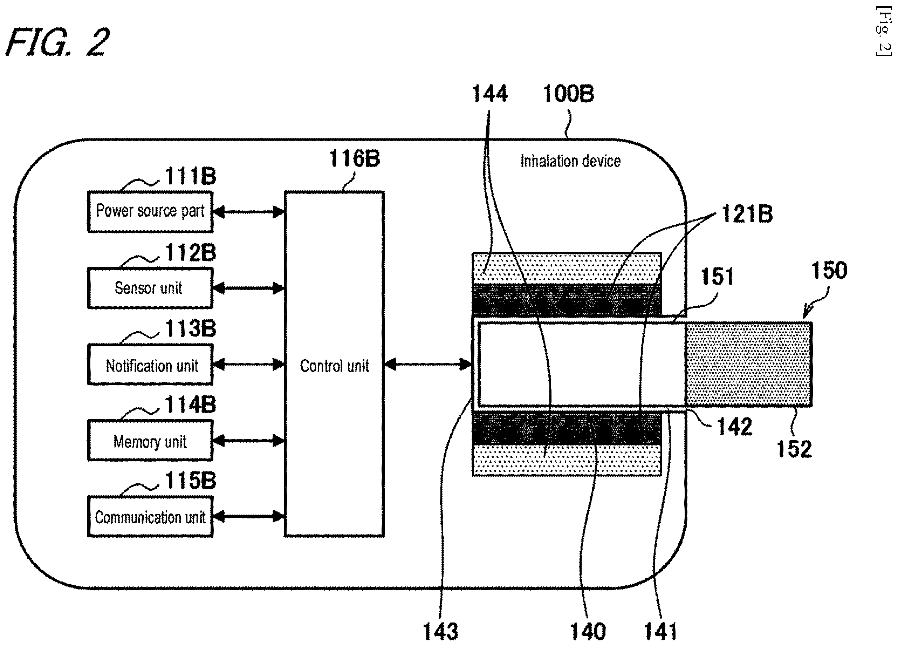

Fig. 2 is a schematic diagram showing a second configuration example of the inhalation device. As illustrated in fig. 2, an inhalation device 100B according to the present configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144. While the inhalation device 100A of the first configuration example had the power source unit 110 containing the power source part 111A and the heating unit 121A separately, the inhalation device 100B of the second configuration example has an integral power power source part 111B and a heating unit 121B. That is, the inhalation device 100B of the second configuration example can also be referred to as a power source unit with a built-in heating unit.

The power source part 111B, sensor unit 112B, notification unit 113B, memory unit 114B, communication unit 115B, and control unit 116B are each substantially identical to the corresponding component included in the inhalation device 100A according to the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 that has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole serving as an outlet for air from the air flow path to the internal space 141 is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may be, for example, a liquid such as water and polyhydric alcohols such as glycerol and propylene glycol comprising the tobacco-derived or non-tobacco-derived flavor component, or else may be a solid comprising the tobacco-derived or non-tobacco-derived flavor component. In a state in which the stick-type substrate 150 is being held in the accommodating portion 140, at least a portion of the substrate portion 151 is accommodated in the internal space 141, and at least a portion of the mouthpiece portion 152 protrudes from the opening 142. Then, when the user holds the mouthpiece portion 152 protruding from the opening 142 in their mouth and inhales, air flows into the internal space 141 via the air flow path, which is not illustrated on the drawings, and reaches the inside of the user's mouth together with the aerosol generated from the substrate portion 151.

In the example illustrated in fig. 2, the heating unit 121B is configured in a film shape and is disposed so as to cover the outer periphery of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations may be adopted, such as the examples illustrated below.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of an external casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating provided by the heating unit 121B. For example, the means for atomizing the aerosol source may be induction heating. In this case, the inhalation device 100B comprises at least an electromagnetic induction source such as a coil for generating a magnetic field, instead of the heating unit 121B. A susceptor that generates heat by means of induction heating may be provided in the inhalation device 100B, or may be contained in the stick-type substrate 150.

The inhalation device 100B may further include the heating unit 121A, the liquid guiding portion 122, the liquid storage portion 123 and the air flow path 180 according to the first configuration example, and the air flow path 180 may supply air to the internal space 141. In this case, the mixed fluid of aerosol and air generated by the heating unit 121A flows into the internal space 141 and is further mixed with the aerosol generated by the heating unit 121B, and reaches the oral cavity of the user.

### 2. Configuration Examples of the Inhalation Device of the Present Disclosure

Next, an embodiment of the inhalation device (hereinafter referred to as the inhalation device 100) applying the configuration of the inhalation device of the present disclosure is described in relation to the inhalation device 100B of the second configuration example previously described. It should be noted that, although the specific description is omitted, some of the configuration of the inhalation device 100 elaborated below can also be applied to the inhalation device 100A of the first configuration example.

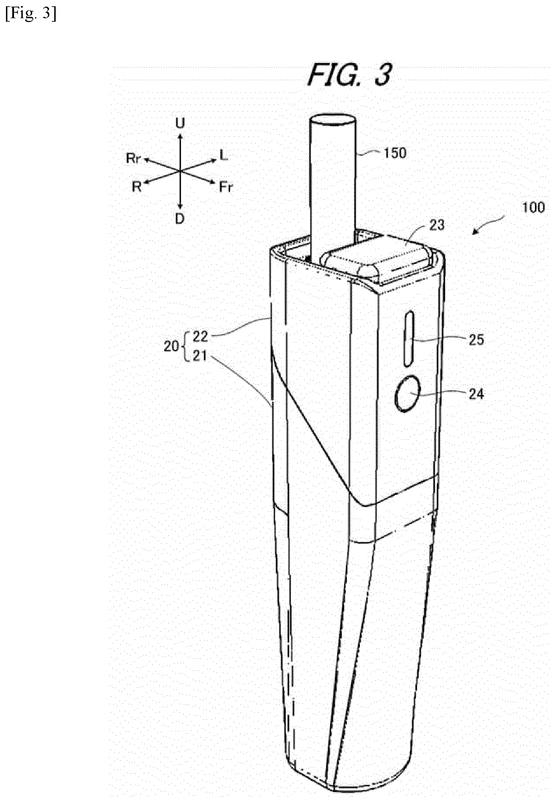

Fig. 3 is an overall perspective view of the inhalation device 100. In the following, in the inhalation device 100, the insertion and removal direction of the stick-type substrate 150 relative to the inhalation device 100 is defined as the vertical direction, the sliding movement direction of a shutter 23 described below is defined as the front-rear direction, and the direction perpendicular to the vertical direction and the front-rear direction is defined as the left-right direction. Also, as shown in the figures, Fr is the front, Rr is the rear, L is the left side, R is the right side, U is up, and D is down.

The inhalation device 100 is preferably sized to fit in the hand, for example, having a rod shape. For example, the user holds the inhalation device 100 in one hand, with fingertips in contact with the front surface of the inhalation device 100. Note that the shape of the inhalation device 100 is not limited to a rod shape, but can be any shape (for example, rounded substantially cuboid shape or ovoid shape).

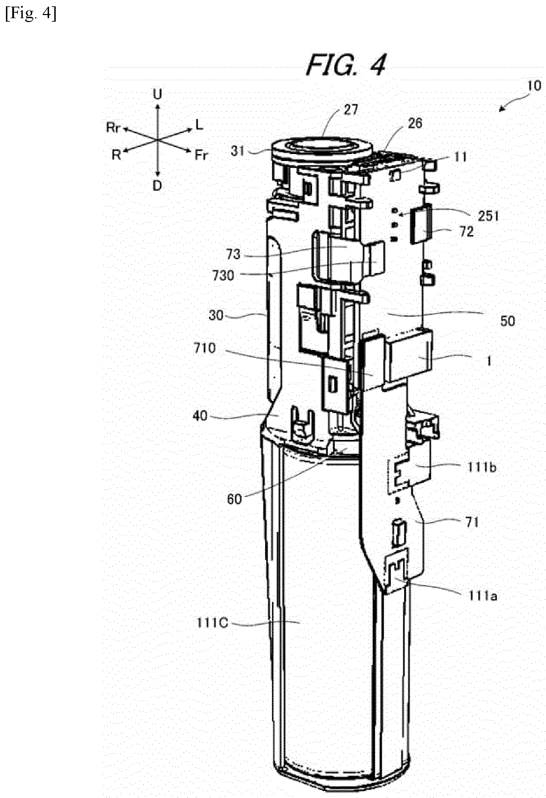

The inhalation device 100 comprises an internal unit 10 (see figs. 4 to 6), and a case 20 that constitutes the external appearance of the inhalation device 100. The case 20 has a lower case 21 and an upper case 22. A portion of the internal unit 10 is accommodated in the lower case 21, and the entire internal unit 10 is accommodated in the case 20 by covering the lower case 21 with the upper case 22 from above.

The upper surface of the inhalation device 100 is provided with an opening 27 (see figs. 4 to 6) through which the stick-type substrate 150 is inserted and removed, and a shutter 23 that is slidable in the front-rear direction. The opening 27 is arranged at the rear of the upper surface of the inhalation device 100. The shutter 23 selectively takes an open state (front position) in which the opening 27 is open to allow insertion and removal of the stick-type substrate 150, and a closed state (rear position) in which the shutter 23 is positioned above the opening 27 to obstruct the opening 27. When inserting the stick-type substrate 150 into the opening 27, the user places the shutter 23 in the open state.

A shutter detection sensor 11 (see fig. 4) is provided near the shutter 23. The shutter detection sensor 11 detects whether or not the shutter 23 is in the open state. The shutter detection sensor 11 is an example of the sensor unit 112B of the inhalation device 100B of fig. 2.

Additionally, the upper surface of the inhalation device 100 is provided with a USB (Universal Serial Bus) port 26 (see fig. 4) arranged adjacent to the opening 27. In the open state described above, the shutter 23 obstructs the USB port 26. On the other hand, in the closed state described above, the shutter 23 does not block the USB port 26 and the USB port 26 is open. The USB port 26 is configured to be electrically connectable with an external power source (not shown on the drawings) capable of supplying power to charge a power source part 111C (see fig. 4). The USB port 26 is, for example, a receptacle in which a mating plug can be inserted. As an example, in the present embodiment, the USB port 26 is a USB Type-C receptacle.

An operation unit 24 and a light-emitting unit 25 are provided on the front side of the inhalation device 100. The operation unit 24 is arranged below the light-emitting unit 25. In more detail, the operation unit 24 and the light-emitting unit 25 are one component of the internal unit 10 housed in the case 20, and are configured so that a part of the operation unit 24 and the light-emitting unit 25 are exposed through an opening formed in the front face of the case 20. The light-emitting unit 25 is an example of the notification unit 113B of the inhalation device 100B of fig. 2.

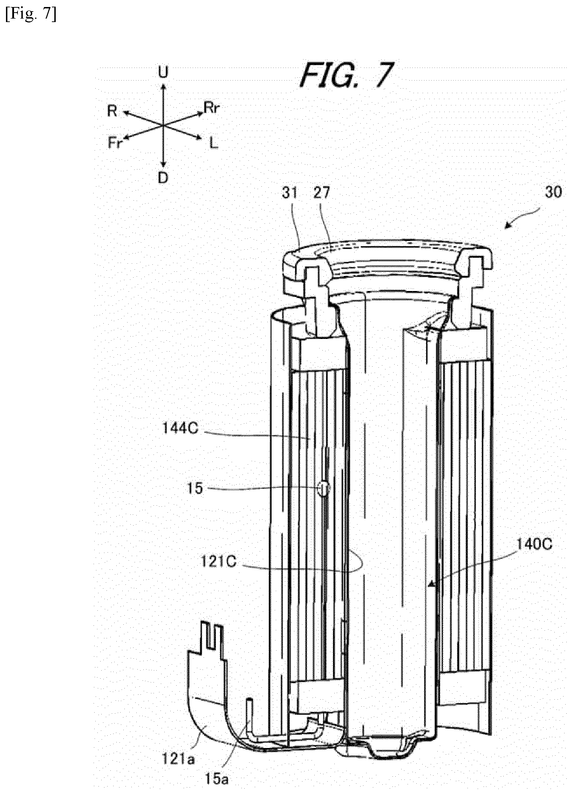

The operation unit 24 is a button-type switch that can be operated by a user, and is an input device for receiving input of information from a user. The operation unit 24 is connected to a main board 50 described below (see figs. 4 to 6). The user depressing the operation unit 24, for example, activates a Micro Controller Unit (MCU) 1 (see figs. 4 to 6) or a heating unit 121C (see fig. 7). Note that the MCU 1 acts as the control unit 116B in the inhalation device 100B. Also, the MCU 1 may be integrally provided with the functions of the communication unit 115B in addition to the functions of the control unit 116B in the inhalation device 100B. Furthermore, the MCU 1 may be configured from one IC, and may be configured from two or more ICs. For example, discharge control for the heating unit 121C and charging control to the power source part 111C may be performed in one IC or may be performed in separate ICs.

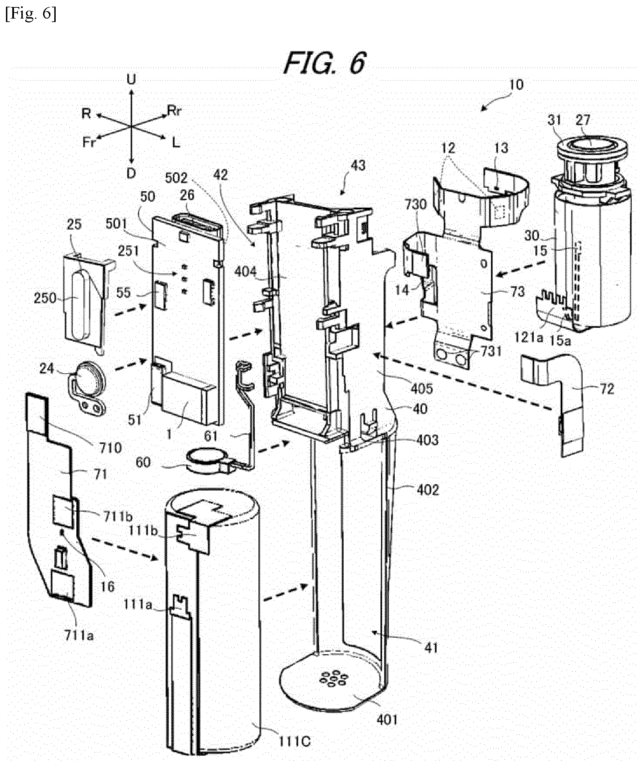

As an example, the light-emitting unit 25 is configured from a light-emitting device such as a light-emitting diode (LED). In more detail, the light-emitting unit 25 includes a plurality of LEDs 251 (see fig. 6) provided on the main board 50, and a transparent cover 250 covering the plurality of LEDs 251 and allowing the transmission of light from the LEDs 251. A portion of the transparent cover 250 is exposed through an opening formed in the front face of the case 20. In the present embodiment, for example, it is assumed that the plurality of LEDs 251 is configured to emit light in a plurality of colors including blue, yellow and red. Note that the number of light emitting elements can be set arbitrarily, for example there may be one light emitting element in the light-emitting unit 25.

The light-emitting unit 25 emits light in a predetermined light-emitting mode by a command from the MCU 1 to notify the user of the predetermined information. Here, the light emitting mode can be, for example, a light emitting color, but this is not a limitation, for example it can be the intensity of the illumination (in other words luminance) or the illumination pattern (e.g. blinking at a predetermined time interval). Also, the predetermined information is, for example, operational information indicating whether the inhalation device 100 is powered on or not.

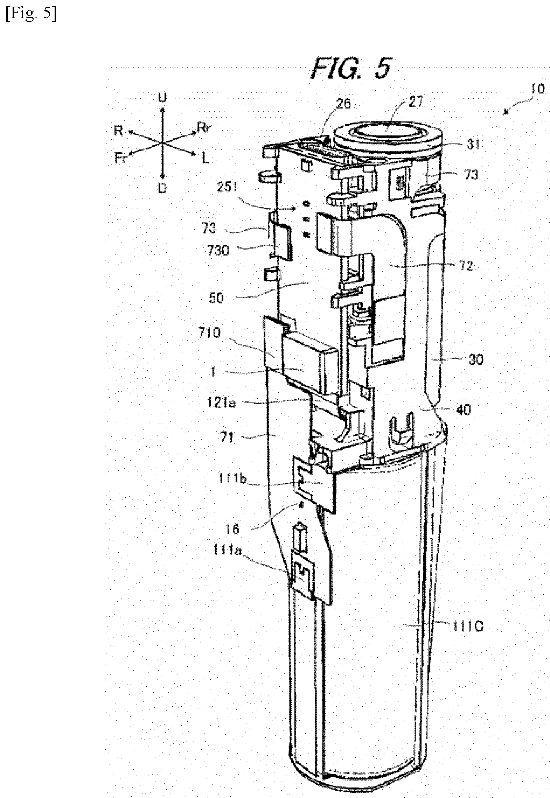

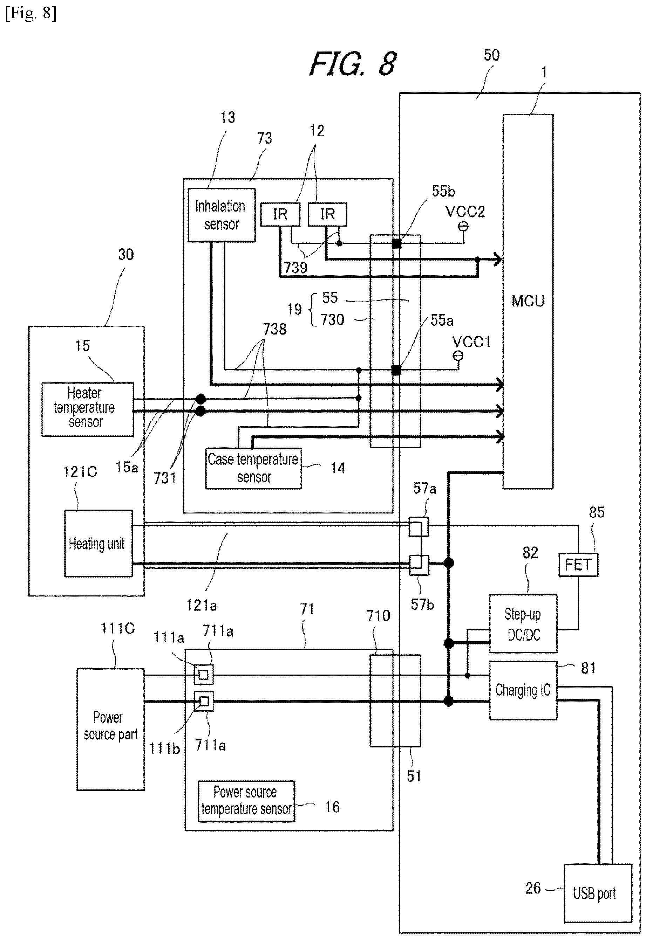

Next, the internal unit 10 of the inhalation device 100 of the present embodiment is described with reference to Figs. 4 to 8. Fig. 4 is a perspective view seen from the front-right side of an internal unit 10, fig. 5 is a perspective view seen from the front-left side of the internal unit 10, fig. 6 is an exploded perspective view of the internal unit 10, fig. 7 is a cross-sectional perspective view of a heater assembly 30, and fig. 8 is a block diagram that briefly illustrates the electrical connection of the main elements of the internal unit 10. Note that the internal unit 10 is the inhalation device 100 from which the case 20 and the shutter 23 have been removed.

The internal unit 10 comprises a chassis 40, the main board 50, a vibration device 60, a heater assembly 30, the power source part 111C, a power source board 71, a peripheral FPC (flexible printed circuit) 72, a sensor FPC 73, and various sensors. The peripheral FPC 72 and the sensor FPC 73 are flexible circuit boards. The flexible circuit board is flexible and comprises conductive and/or signal wiring and can mount electronic components (elements) such as resistors and chips. The flexible circuit board is typically set in thickness to 100-600 µm. The power source board 71 may be a flexible circuit board, a rigid board as described below, or a combination of a flexible board and a rigid board, but here the example of a flexible circuit board is described as an example.

### Chassis

The chassis 40 comprises, as shown in the exploded oblique view of fig. 6, a power source retention portion 41 holding the power source part 111C, a board retention portion 42 holding the main board 50, and a heater retention portion 43 holding the heater assembly 30. The power board retention portion 41 is located at the lower part of the chassis 40, and the board retention portion 42 and the heater retention portion 43 are located at the upper part of the chassis 40.

The power source retention portion 41 has a cylindrical shape, with a portion of the side cut out, in other words a substantially semi-cylindrical shape. The power source retention portion 41 has a bottom wall portion 401, a side wall portion 402 having a circular arc shape and standing upwards from the bottom wall portion 401, and a top wall portion 403 provided at the upper end of the side wall portion 402. The power source part 111C is arranged in a space surrounded by the bottom wall portion 401, the side wall portion 402 and the top wall portion 403.

The board retention portion 42 is provided in a vertical wall portion 404 extending upward from the top wall portion 403 of the power source retention portion 41. The board retention portion 42 is provided on one side (here on the front side) of the vertical wall portion 404 in the front-rear direction, and holds the main board 50.

The heater retention portion 43 is provided on the opposite side (here on the rear side) to the board retention portion 42 of the vertical wall portion 404 in the front-rear direction. The heater retention portion 43 has a space surrounded by the vertical wall portion 404, a left and right pair of wall portions 405 extending from the vertical wall portion 404 in a front-rear direction, and an upper surface of the top wall portion 403 of the power source retention portion 41, and the heater assembly 30 is arranged in this space.

### Main Board

The main board 50 is a rigid board with a plurality of electronic components (elements) mounted on both sides. The rigid board is not flexible and is generally set in thickness to 300-1,600 µm. On the main board 50, the MCU 1, the LED 251, a charging IC (integrated circuit) 81, a step-up DC/DC converter 82, and so on, are mounted. The main board 50 is held in the board retention portion 42 of the chassis 40 so that the element mounting surface is oriented in the front-rear direction. In fig. 6, only a surface 501 of the main board 50 (here the front surface) is shown. Therefore, the charging IC 81 and the step-up DC/DC converter 82 mounted on the back side 502 (here on the rear side), are not shown.

In the lower region of the surface 501 of the main board 50, a power connection part 51 is provided for electrical connection with the power source part 111C. The power connection part 51 is electrically connected to the power source part 111C via a board connection part 710 of the power source board 71. The power source part 111C is a cylindrical lithium-ion secondary battery, and is an example of the power source part 111B of the inhalation device 100B of fig. 2.

As shown in fig. 6, the power source part 111C is provided with a positive electrode tab 111a and a negative electrode tab 111b. The power source part 111C is arranged in the power source retention portion 41 of the chassis 40 so that the positive electrode tab 111a and the negative electrode tab 111b are arranged to the front. The power source board 71 is arranged in front of the power source part 111C and the main board 50, and extends in the vertical direction. With reference also to fig. 8, a positive electrode tab connection part 711a and a negative electrode tab connection part 711b of the power source board 71 are respectively connected to the positive electrode tab 111a and the negative electrode tab 111b of the power source part 111C, and the board connection part 710 is electrically connected to the power connection part 51 of the main board 50. The power of the power source part 111C is transmitted to the main board 50 through a conductive track formed in the power source board 71, and is supplied to each electronic component, such as the step-up DC/DC converter 82. The power source board 71 is also provided with a power source temperature sensor 16. The power source temperature sensor 16 is a temperature sensor for measuring the temperature of the power source part 111C. The power source temperature sensor 16 is, for example, a thermistor. The power source temperature sensor 16 is an example of the sensor unit 112B of the inhalation device 100B of fig. 2.

The USB port 26 is provided in an upper region of the back side 502 of the main board 50. The USB port 26 is electrically connected to the charging IC 81 by wires formed in the main board 50.

Heater connections 57a, 57b are provided on the back side 502 of the main board 50, in addition to the charging IC 81 and the step-up DC/DC converter 82, as shown in fig. 8. The charging IC 81 performs charging control to supply (charge) the power input from the USB port 26 to the power source part 111C. The step-up DC/DC converter 82 steps up the voltage of the power supplied from the power source part 111C, to generate power to supply to the heating part 121C via a heating switch 85. The heating switch 85 is a FET (field effect transistor), for example.

A board connection part 121a extending from below the heater assembly 30 is connected to the heater connections 57a, 57b to provide power to the heating unit 121C of the heater assembly 30. The heating unit 121C of the heater assembly 30 is thereby supplied with power from the power source part 111C via the main board 50.

### Vibration Device

The vibration device 60 is configured with a vibrating element such as for example a vibrating motor. As shown in fig. 6, the vibration device 60 is arranged in the power source retention portion 41 of the chassis 40 between the top surface of the power source part 111C and the top wall portion 403. Lead wires 61 of the vibration device 60 are connected to the peripheral FPC 72. The vibration device 60 vibrates in a predetermined vibration mode by a command from the MCU 1, to notify the user of predetermined information. For example, at the start or end of heating of the stick-type substrate 150, the vibration device 60 vibrates in a predetermined vibration mode to notify the user of the start or end of heating. The vibration device 60 is an example of the notification unit 113B of the inhalation device 100B of fig. 2.

### Heater Assembly

The heater assembly 30 comprises the heating unit 121C, the accommodating portion 140C, and the heat insulating portion 144C. The heating unit 121C is, for example, a film heater, and is wound around the outer circumference of the accommodating portion 140C. Also, the heating unit 121C and the board connection part 121a may be configured with a single heater FPC.

The heater assembly 30 is also provided with a stick guide 31. The stick guide 31 is provided at the top of the heater assembly 30, and guides the insertion and removal of the stick-type substrate 150 into the accommodating portion 140C. The stick guide 31 is a cylindrical-shaped member, has the opening 27, and constitutes part of the accommodating portion 140C.

The heater assembly 30 is also provided with a heater temperature sensor 15 capable of measuring the temperature of the heating unit 121C. More specifically, the heater temperature sensor 15 is provided between the heating unit 121C and the insulating portion 144C, in contact with or close to the heating unit 121C. The heater temperature sensor 15 is, for example, a thermistor.

### Sensor FPC

As shown in fig. 6, the sensor FPC 73 is arranged in the heater retention portion 43 between the vertical wall portion 404 and the heater assembly 30. The sensor FPC 73 is equipped with a stick detection sensor 12, an inhalation sensor 13, and a case temperature sensor 14. The stick detection sensor 12, the inhalation sensor 13, and the case temperature sensor 14 are examples of the sensor unit 112B of the inhalation device 100B of fig. 2.

The stick detection sensor 12 is a sensor capable of detecting the stick-type substrate 150 housed in the accommodating portion 140. In the present embodiment, the stick detection sensor 12 is an optical sensor capable of detecting the stick-type substrate 150 based on the amount of light reflected from the light emitted to the accommodating portion 140. Here, amount of light is a concept that includes luminous flux, illuminance, luminous emittance, brightness, luminance, and so on. The optical sensor is for example an infrared ray (IR) sensor.

The inhalation sensor 13 is a sensor that detects a puff action (inhalation action) of a user. The inhalation sensor 13 comprises, for example, a capacitor microphone, a pressure sensor, a puff thermistor, or the like. The inhalation sensor 13 is provided in proximity to the stick guide 31 in the sensor FPC 73.

The case temperature sensor 14 is a sensor for measuring the temperature of the case 20. The case temperature sensor 14 is, for example, a thermistor. The case temperature sensor 14 is arranged in the sensor FPC 73 next to the inner surface of the case 20.

The sensor FPC 73 is also provided with a heater temperature sensor connection part 731 connected to the heater temperature sensor 15 of the heater assembly 30. The heater temperature sensor connection part 731 is provided in the lower part of the sensor FPC 73. In more detail, lead wires 15a are connected to the heater temperature sensor 15, and the heater temperature sensor connection part 731 is connected to the lead wires 15a extending from underneath the heater assembly 30.

The stick detection sensor 12, the inhalation sensor 13, the case temperature sensor 14, and the heater temperature sensor connection part 731 are connected to a board connection part 730 via signal wiring formed in the sensor FPC 73. The substrate connection part 730 is connected to a sensor FPC connection part 55 provided in a central region of the surface 501 of the main board 50. In this way, the detection result of each sensor is output to the MCU 1, and so on, mounted on the main board 50. The sensor FPC 73 will be described in more detail later.

In the inhalation device 100 configured in this way, when the open state of the shutter 23 is detected by the shutter detection sensor 11 and the stick-type substrate 150 is detected by the stick detection sensor 12, the MCU 1 starts the heating by the heating unit 121C. When a user inhales on the mouthpiece portion 152 of the stick-type substrate 150, aerosol is supplied into the user's mouth from the aerosol source of the stick-type substrate 150 heated by the heating unit 121C. The inhalation sensor 13 detects the number of puffs, and the MCU 1 stops the heating after a predetermined number of puffs or after a predetermined time has elapsed. During heating of the inhalation device 100, the case temperature sensor 14, the heater temperature sensor 15, and the power source temperature sensor 16 measure each temperature, and if it is determined that there is abnormal heating, the MCU 1 stops or reduces the heating by the heating unit 121C. The user can also operate the operation unit 24 to, for example, check the SOC of the power source part 111C. The light-emitting unit 25 (LEDs 251) and the vibration device 60 notify the user of various information such as the SOC of the power source part 111C, error indications, and so on. When the SOC of the power source part 111C drops, the user can connect an external power source to the USB port 26 to charge the power source part 111C.

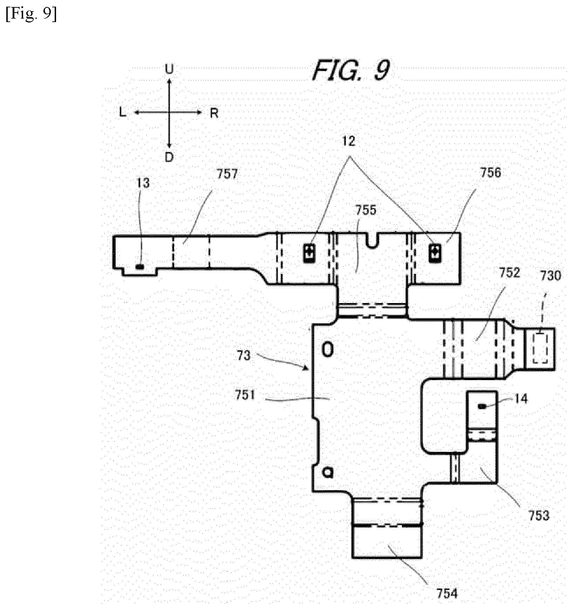

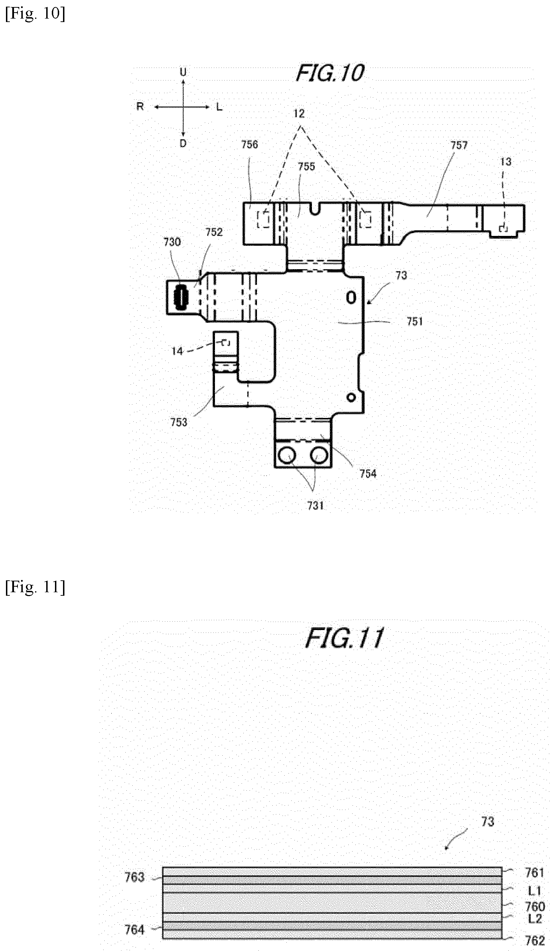

Next, the sensor FPC 73 will be described in detail with reference to fig. 9-11. Fig. 9 is a developed view of the front surface of the sensor FPC 73, and fig. 10 is a developed view of the back surface of the sensor FPC 73. Fig. 11 is a cross-sectional view of the sensor FPC 73. Note that the one-dot chain line and the two-dot chain line in figs. 9 and 10 are folding lines.

The sensor FPC 73 has a multilayer structure. Specifically, as shown in fig. 11, the sensor FPC 73 comprises a board 760, a first conductive layer L1 provided on one side of the board 760 (hereinafter the surface); a second conductive layer L2 provided on the other side of the board 760 (hereinafter the back surface); a first insulating layer 761 located on the first conductive layer L1; a second insulating layer 762 located on the second conductive layer L2; a first adhesive layer 763 adhering the first conductive layer L1 and the first insulating layer 761; and a second adhesive layer 764 adhering the second conductive layer L2 and the second insulating layer 762.

The sensor FPC 73 includes a substantially rectangular body portion 751 that is longer in a vertical direction than in a horizontal direction, an upper right extension portion 752 extending right from an upper portion of the body portion 751, a lower right extension portion 753 extending right from a lower portion of the body portion 751, a lower extension portion 754 extending further downward from a lower portion of the body portion 751, an upper extension portion 755 extending further upward from an upper portion of the body portion 751, an upper right extension portion 756 extending right from the upper extension portion 755, and an upper left extension portion 757 extending left from the upper extension portion 755. The upper left extension portion 757 is longer than the upper right extension portion 756, and as shown in fig. 6, in a state where the sensor FPC 73 is folded and housed in the case 20 (hereinafter, the housed state), the tip end (left end) of the upper left extension portion 757 is configured to face the body portion 751.

As described above, the stick detection sensor 12, the inhalation sensor 13, and the case temperature sensor 14 are mounted on the sensor FPC 73, and are connected to the sensor FPC connection part 55 of the main board 50 by the board connection part 730. More specifically, the stick detection sensor 12, the inhalation sensor 13, and the case temperature sensor 14 are configured to mounted on the front surface of the sensor FPC 73, as shown in fig. 9.

The stick detection sensor 12 is disposed at a substantially symmetrical position with the upper extension portion 755 interposed therebetween, one for each of the upper right extension portion 756 and the upper left extension portion 757. The stick detection sensor 12 is disposed on the outer peripheral portion of the stick guide 31 in the housed state and is capable of detecting the stick-type substrate 150 housed in the accommodating portion 140.

The inhalation sensor 13 is disposed at the tip (left end) of the upper left extension portion 757. The inhalation sensor 13 is disposed on the outer peripheral portion of the stick guide 31 in the housed state, and detects a pressure change or a temperature change of air flowing from the vicinity of the opening 27 to the accommodating portion 140 in accordance with a puff action (inhalation action).

The case temperature sensor 14 is disposed at the tip end (upper end) of the lower right extension portion 753. The case temperature sensor 14 is close to a wall surface of the case 20 in the housed state, and detects a temperature of the case 20. The two stick detection sensors 12 and the inhalation sensor 13 are arranged at substantially the same positions in the vertical direction (longitudinal direction of the sensor FPC), whereas the case temperature sensor 14 is arranged at a position in the vertical direction different from these, which is below in the present embodiment.

The substrate connection part 730 is mounted on the back surface of the sensor FPC 73, as shown in fig. 10. The substrate connection part 730 is disposed at a position between the vertical direction positions of the tip end (right end) of the upper right extension portion 752, or namely the two stick detection sensors 12, and the inhalation sensor 13, and the vertical direction position of the case temperature sensor 14.

By mounting the stick detection sensor 12, the inhalation sensor 13, and the case temperature sensor 14 in this manner on the sensor FPC 73, which is a flexible circuit board thinner and more flexible than a rigid board, the main board 50 which is a rigid board can be made compact. Further, these sensors 12-14 are electrically connected together to the sensor FPC connection part 55 of the main board 50 at the board connection part 730 through signal wires 738 and 739 formed on the sensor FPC 73. Accordingly, the connection parts of the respective sensors 12 and 14 to the main board 50 can be made common, and the main board 50, which is a rigid board, can be made compact.

The substrate connection part 730 of the sensor FPC 73 and the sensor FPC connection part 55 of the main board 50 are preferably a connector 19 composed of a plug (male connector) and a receptacle (female connector). Thus, connection work is facilitated. As shown in fig. 8, the sensor FPC connection part 55 is connected to the MCU 1 via signal wiring formed on the main board 50.

Note that, in the present embodiment, three sensors, i.e., the stick detection sensor 12, the inhalation sensor 13, and the case temperature sensor 14, were mounted on the sensor FPC 73, but as long as two or more sensors are mounted, other sensors may be mounted in place of or along with these sensors. Other sensors are, for example, a power source temperature sensor 16. That is, at least two sensors may be mounted on the sensor FPC 73 regardless of the type of the sensor, and the connection parts to the main board 50 may be made common.

Furthermore, even if the arrangement positions (longitudinal direction of the sensor FPC) of the sensors differ, it is preferable that the connection parts to the main board 50 are made common. In the present embodiment, the case temperature sensor 14 disposed at a different position in the vertical (longitudinal direction of the sensor FPC) relative to the two stick detection sensors 12 and the inhalation sensor 13 is also connected to the sensor FPC connection part 55 of the main board 50 via the board connection part 730. By making the connection parts of the sensors to the main board 50 at separated positions common in this manner, it is possible to make the main board 50 which is a rigid board compact.

In this case, it is preferable that the positions of the connection parts to the main board 50 are disposed between the sensor positioned on one end side and the sensor positioned on the other end side in the longitudinal direction of the sensor FPC. In the present embodiment, the board connection part 730 is disposed between the position in the vertical direction (longitudinal direction of the sensor FPC) of the two stick detection sensors 12 and the inhalation sensor 13, and the position in the vertical direction (longitudinal direction of the sensor FPC) of the case temperature sensor 14. Thus, the lengths of signal wires from each sensor to the board connection part 730 can be equalized.

Furthermore, as shown in fig. 8, an input voltage VCC1, which is an input voltage of the same potential, is supplied to the inhalation sensor 13 and the case temperature sensor 14. Accordingly, the inhalation sensor 13 and the case temperature sensor 14 may be connected to the signal wire 738 of the same potential and connected to the main board 50 at the same electrical contact 55A. By mounting the sensors connected to the signal wire of the same potential on the sensor FPC 73 in this manner, it is possible to use the same electrical contact 55a at the same sensor FPC connection part 55, and thus it is not necessary to provide a plurality of electrical contacts in the sensor FPC connection part 55 for each sensor, and the main board 50 can be made compact.

Furthermore, in the present embodiment, the heater temperature sensor 15 connected to the sensor FPC 73 via the lead wire 15a is also supplied with the same input voltage VCC1 as the inhalation sensor 13 and the case temperature sensor 14, is connected to a signal wire of the same potential, and is connected to the main board 50 at the same electrical contact 55a. Thus, the main board 50 can be made even more compact.

An input voltage VCC2 is supplied to the two stick detection sensors 12. Accordingly, the two stick detection sensors 12 may be connected to the signal wire 739 of the same potential and connected to the main board 50 at the same electrical contact 55b. The input voltage VCC2 of the two stick detection sensors 12 and the input voltage VCC1 of the inhalation sensor 13 and the case temperature sensor 14 may be the same or different. If the input voltage VCC1 and the input voltage VCC2 are the same, the electrical contact 55a and the electrical contact 55b may be made common or different. On the other hand, if the input voltage VCC1 and the input voltage VCC2 are different, the electrical contact 55a and the electrical contact 55b must be different. Even with sensors having different input voltages in this manner, by differing the electrical contacts, it is possible to mount the sensors on the sensor FPC 73 and make the connection parts to the main board 50 common.

Although various embodiments of the present disclosure have been described above with reference to the drawings, it goes without saying that the present disclosure is not limited to such examples. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiment described above may be arbitrarily combined within a range not deviating from the spirit of the invention.

Although the sensor FPC 73 has been illustrated as a flexible circuit board in the above embodiments, the present disclosure may be applied to the power source board 71, or applied to a peripheral FPC 72, or applied to other flexible circuit boards used in an aerosol generation device.

The present specification sets forth at least the following features. Note that corresponding components and so on in the embodiment described above are shown in parentheses, but are not limited thereto.

(1) A power source unit (power source unit 110, inhalation device 100B, 100) for an aerosol generation device, the power source unit comprising: a power source (power source part 111A to 111C) that supplies power to a heating unit (heating unit 121A to 121C) for heating an aerosol source (stick-type substrate 150);
   at least two or more sensors (stick detection sensor 12, inhalation sensor 13, and case temperature sensor 14);
   a flexible circuit board (sensor FPC 73) on which the at least two or more sensors are mounted;
   a rigid board (main board 50) fixed to the flexible circuit board via a connection part (sensor FPC connection part 55); and
   a case (case 20) that houses the power source, the at least two or more sensors, the flexible circuit board, and the rigid board, wherein
   the at least two or more sensors are electrically connected to the rigid board via the connection part.

According to (1), a rigid board and a flexible circuit board that is thinner and more flexible than the rigid board are combined, thereby making it possible to save space inside the case. Furthermore, by mounting at least two or more sensors on a flexible circuit board and making the respective connection parts for the sensors to the rigid board common, it is possible to make the rigid board compact.

(2) The power source unit for an aerosol generation device according to (1), wherein
the at least two or more sensors include a thermistor (inhalation sensor 13, case temperature sensor 14).

According to (2), the sensor including the thermistor is mounted on the flexible circuit board, thereby allowing the rigid board to be made more compact as compared with mounting the sensor on the rigid board.

(3) The power source unit for an aerosol generation device according to (2), wherein
the at least two or more sensors include a puff thermistor (inhalation sensor 13) that detects inhaled air.

According to (3), the puff thermistor is mounted on the flexible circuit board, thereby allowing the rigid board to be made more compact as compared with mounting the puff thermistor on the rigid board.

(4) The power source unit for an aerosol generation device according to (2) or (3), wherein the at least two or more sensors include a thermistor (case temperature sensor 14, power source temperature sensor 16) that detects at least one temperature among the temperature of the power source and the temperature of the case.

According to (4), the thermistor for detecting the temperature of the power source or the temperature of the case is mounted on the flexible circuit board, thereby allowing the rigid board to be made more compact as compared with mounting the thermistor on the rigid board.

(5) The power source unit for an aerosol generation device according to any one of (1) to (4), wherein
the at least two or more sensors include a sensor (stick detection sensor 12) that detects insertion of the aerosol source into the heating unit.

According to (5), the sensor for detecting insertion into the heating unit is mounted on the flexible circuit board, thereby allowing the rigid board to be made more compact as compared with mounting the sensor on the rigid board.

(6) The power source unit for an aerosol generation device according to any one of (1) to (5), wherein
the at least two or more sensors are connected to a signal wire (signal wire 738) of the same potential and are connected to the same electrical contact (electrical contact 55a) at the connection part.

According to (6), by mounting the sensors connected to the signal wire of the same potential on the sensor flexible circuit board, it is possible to use the same electrical contact at the connection part, and thus it is not necessary to provide a plurality of electrical contacts for each sensor, and the rigid board can be made compact.

(7) The power source unit for an aerosol generation device according to any one of (1) to (6), wherein
the at least two or more sensors are connected to different electrical contacts (electrical contact 55a, 55b) at the connection part.

According to (7), the flexible circuit board may be mounted with sensors connected to signal wires of different potentials not only when only the sensors connected to a signal wire of the same potential are mounted, but also when the sensors are mounted on the flexible circuit board, thereby allowing the rigid board to be made compact.

(8) The power source unit for an aerosol generation device according to any one of (1) to (7), wherein
an element different than the at least two or more sensors is connected to the flexible circuit board by a lead wire, and
the element is electrically connected to the rigid board via the connection part.

According to (8), the connection part can be made common and the rigid board can be made compact as compared with the element being directly connected to the rigid board.

(9) The power source unit for an aerosol generation device according to any one of (1) to (8), wherein
the at least two or more sensors are mounted at different positions in a longitudinal direction of the flexible circuit board.

According to (9), a connection part that is also common to sensors connected at separated positions can be connected to the rigid board.

(10) The power source unit for an aerosol generation device according to (9), wherein
the connection part is disposed between a sensor positioned on one end side and a sensor positioned on the other end side in the longitudinal direction.

According to (10), the lengths of signal wires from the sensor to the connection part can be equalized.

(11) The power source unit for an aerosol generation device according to any one of (1) to (10), comprising
a control device (control unit 116A, control unit 116B, MCU 1) that is mounted on the rigid board and controls discharging to the heating unit and/or charging to the power source, wherein
the at least two or more sensors are electrically connected to the control device via the connection part.

According to (11), the control device is mounted on the rigid board, thereby making it possible to reliably hold the control device.

(12) The power source unit for an aerosol generation device according to any one of (1) to (11), wherein
the connection part is a connector (connector 19) composed of a plug and a receptacle.

According to (12), the connection work between the rigid board and the flexible circuit board is facilitated.

(13) An aerosol generation device (inhalation device 100B, 100) comprising: a power source (power source part 111A to 111C);
a heating unit (heating unit 121A to 121C) that consumes power supplied from the power source to heat an aerosol source;
at least two or more sensors (stick detection sensor 12, inhalation sensor 13, and case temperature sensor 14);
a flexible circuit board (sensor FPC 73) on which the at least two or more sensors are mounted;
a rigid board (main board 50) fixed to the flexible circuit board via a connection part (sensor FPC connection part 55); and
a case (case 20) that houses the power source, the at least two or more sensors, the flexible circuit board, and the rigid board, wherein
the at least two or more sensors are electrically connected to the rigid board via the connection part.

According to (13), by mounting at least two or more sensors on a flexible circuit board and making the respective connection parts for the sensors to the rigid board common, it is possible to make the rigid board compact.

### REFERENCE SIGNS LIST

1 MCU (control device)
19 Connector
12 Stick detection sensor (sensor)
13 Inhalation sensor (sensor, puff thermistor)
14 Case temperature sensor (sensor)
16 Power source temperature sensor (sensor)
20 Case
50 Main board (rigid board)
55 Sensor FPC connection part (connection part)
55A Electrical contact
55B Electrical contact
73 Sensor FPC (flexible circuit board)
100A Inhalation device (aerosol generation device)
100 Inhalation device (aerosol generation device, power source unit)
100B Inhalation device (aerosol generation device, power source unit)
110 Power source unit
111A Power source unit (power source)
111B Power source unit (power source)
111C Power source unit (power source)
116A Control unit (control device)
116B Control unit (control device)
121A Heating unit
121B Heating unit
121C Heating unit
150 Stick-type substrate (aerosol source)
738 Signal wire

## Claims

1. A power source unit for an aerosol generation device, the power source unit comprising: a power source that supplies power to a heating unit for heating an aerosol source;
at least two or more sensors;
a flexible circuit board on which the at least two or more sensors are mounted;
a rigid board fixed to the flexible circuit board via a connection part; and
a case that houses the power source, the at least two or more sensors, the flexible circuit board, and the rigid board, wherein
the at least two or more sensors are electrically connected to the rigid board via the connection part.

2. The power source unit for an aerosol generation device according to claim 1, wherein
the at least two or more sensors include a thermistor.

3. The power source unit for an aerosol generation device according to claim 2, wherein
the at least two or more sensors include a puff thermistor that detects inhaled air.

4. The power source unit for an aerosol generation device according to claim 2 or 3, wherein
the at least two or more sensors include a thermistor that detects at least one temperature among the temperature of the power source and the temperature of the case.

5. The power source unit for an aerosol generation device according to any one of claims 1 to 4, wherein
the at least two or more sensors include a sensor that detects insertion of the aerosol source into the heating unit.

6. The power source unit for an aerosol generation device according to any one of claims 1 to 5, wherein
the at least two or more sensors are connected to a signal wire of the same potential and are connected to the same electrical contact at the connection part.

7. The power source unit for an aerosol generation device according to any one of claims 1 to 6, wherein
the at least two or more sensors are connected to different electrical contacts at the connection part.

8. The power source unit for an aerosol generation device according to any one of claims 1 to 7, wherein
an element different than the at least two or more sensors is connected to the flexible circuit board by a lead wire, and
the element is electrically connected to the rigid board via the connection part.

9. The power source unit for an aerosol generation device according to any one of claims 1 to 8, wherein
the at least two or more sensors are mounted at different positions in a longitudinal direction of the flexible circuit board.

10. The power source unit for an aerosol generation device according to claim 9, wherein
the connection part is disposed between a sensor positioned on one end side and a sensor positioned on the other end side in the longitudinal direction.

11. The power source unit for an aerosol generation device according to any one of claims 1 to 10, comprising
a control device that is mounted on the rigid board and controls discharging to the heating unit and/or charging to the power source, wherein
the at least two or more sensors are electrically connected to the control device via the connection part.

12. The power source unit for an aerosol generation device according to any one of claims 1 to 11, wherein
the connection part is a connector composed of a plug and a receptacle.

13. An aerosol generation device comprising: a power source;
a heating unit that consumes power supplied from the power source to heat an aerosol source;
at least two or more sensors;
a flexible circuit board on which the at least two or more sensors are mounted;
a rigid board fixed to the flexible circuit board via a connection part; and
a case that houses the power source, the at least two or more sensors, the flexible circuit board, and the rigid board, wherein
the at least two or more sensors are electrically connected to the rigid board via the connection part.
